# EUROPÄISCHE PATENTSCHRIFT

(11) **EP 3 093 447 B1**
(45) Veröffentlichungstag und Bekanntmachung des Hinweises auf die Patenterteilung: **19.06.2019**
(21) Anmeldenummer: 16158544.3
(22) Anmeldetag: 03.03.2016
(51) Int. Cl.: F01D 5/22, F01D 11/00, F01D 5/08

(54) **ROTOR EINER TURBINE EINER GASTURBINE MIT VERBESSERTER KÜHLLUFTFÜHRUNG**
ROTOR OF A TURBINE OF A GAS TURBINE WITH IMPROVED COOLING AIR CONDUCTION
ROTOR D'UNE TURBINE A GAZ AYANT UN GUIDAGE D'AIR DE REFROIDISSEMENT AMELIORE

(30) Priorität: 04.03.2015 DE 102015203871
(43) Veröffentlichungstag der Anmeldung: 16.11.2016
(73) Patentinhaber: Rolls-Royce Deutschland Ltd & Co KG, 15827 Blankenfelde-Mahlow (DE)
(72) Erfinder: WEINERT, Markus, 15834 Rangsdorf (DE); LEYMANN, Tobias, 14059 Berlin (DE)
(74) Vertreter: Hoefer & Partner Patentanwälte mbB

(56) Entgegenhaltungen:
- WO-A1-2007/063128
- DE-A1-102005 054 823
- US-A1- 2009 263 235
- US-A1- 2010 124 508

## Beschreibung

Die Erfindung bezieht sich auf einen Rotor einer Hochdruckturbine und/oder einer Mitteldruckturbine und/oder einer Niederdruckturbine einer Fluggasturbine oder einer stationären Industriegasturbine gemäß den Merkmalen des Oberbegriffs des Anspruches 1.

Im Einzelnen bezieht sich die Erfindung auf die Ausgestaltung von inneren und/oder äußeren Schaufelplattformen, an denen jeweils eine oder mehrere Turbinenschaufeln ausgebildet sind. Zwischen den Schaufelplattformen ist eine Kühlluftkammer vorgesehen, um Kühlluft zwischen benachbarten Schaufelplattformen durchzuführen. Im Bereich der Kühlluftkammer befindet sich ein sich in radialer Richtung erstreckender, an der Unterseite der Schaufelplattformen angeordnetes Dämpfungselement oder ein Dichtelement/Dichtdraht.

Aus dem Stand der Technik ist es bekannt, aufgrund der hohen Temperaturen den hinteren Teil einer Schaufelplattform eines Hochdruckturbinen-Rotors zu kühlen. Hierbei werden Dämpfungselemente eingesetzt, welche mit Durchströmausnehmungen versehen sind, um Kühlluft durchzuführen, damit die maximale Einsatztemperatur des Schaufelmaterials nicht überschritten wird bzw. eine die Lebensdauer verringernde Oxidation vermieden wird. Die Durchströmausnehmungen, welche kanalartig ausgebildet sind, sorgen für einen zusätzlichen Kühlluftmassenstrom aus dem Sekundärluftsystem der Fluggasturbine. Der zusätzliche Kühlluftmassenstrom tritt dabei zwischen zwei benachbarten Schaufelplattformen aus und reduziert durch Konvektionskühlung die Plattformmetalltemperatur. Weiterhin erzeugt der Kühlluftmassenstrom einen Kühlluftfilm zwischen dem durch die Turbine strömenden Heißgas und der Schaufelplattform, um die Metalltemperatur der Plattform weiter zu verringern und somit die Lebensdauer der Turbinenschaufel zu erhöhen.

Bei der Ausgestaltung nach dem Stand der Technik ergeben sich eine Reihe von Nachteilen. Zum einen ist die Fertigung der Durchströmausnehmungen oder Kühlungskanäle am Dämpfungselement aufwendig und kostenintensiv. Zum anderen muss ein Plattformzwischenspalt zwischen benachbarten Schaufelplattformen größer ausgelegt werden, um den Mindest-Kühlungsmassenstrom in allen Betriebspunkten und unter sämtlichen Toleranzfällen zu gewährleisten. Dies führt zu Nachteilen bei der Aerodynamischen-Performance bzw. beim Wirkungsgrad der Hochdruckturbine. Zusätzlich wird die Ausbildung eines Kühlluftfilms durch die Kante der Schaufelplattform negativ beeinträchtigt, die Ausströmung der Kühlluft erfolgt nicht optimal. Durch den vergrößerten Plattformzwischenspalt ergibt sich eine verringerte Anlagefläche zwischen der Schaufelplattform und dem Dämpfungselement, wodurch ein reduzierter Dämpfungseffekt auftritt. Weiterhin kann der Kühlungskanalquerschnitt nur in radialer Richtung vergrößert werden, ohne die Dämpfungsfläche zu verringern. Beim Stand der Technik kann dies nur radial nach innen gerichtet erfolgen. Dies führt zu weiteren Strömungsverlusten, da die Kühlluft über eine noch größere Stufe strömen muss, um die Plattform zu erreichen. Zusätzlich können die Durchströmausnehmungen oder Kühlungskanäle des Dämpfungselements durch Abrieb oder Fremdpartikel blockiert werden. Das Material des Dämpfers hat einen höheren Verschleiß gegenüber dem Schaufelmaterial. Eine weitere Verringerung der Plattformkühlung kann durch eine Abnutzung des Dämpfungselements, insbesondere der Wandungen oder Kanten der Durchströmungsausnehmung bzw. der Kühlungskanäle erfolgen. Des Weiteren kann die Kühlungsmethode nach dem Stand der Technik nicht mit Dichtdrähten (seal-wires) realisiert werden, da diese keine ausreichend großen Kühlungskänale beinhalten können.

Aus der DE 10 2005 054 823 A1 ist es bekannt, zwischen benachbarten Schaufelplattformen einen Spalt auszubilden, durch welchen Kühlluft radial nach außen abströmen kann. Bei einer thermischen Ausdehnung der Schaufelplattformen verringert sich die Breite des Spaltes, sodass zunehmend weniger Luft ausgeführt werden kann. Zudem wird der Schlitz zwischen den Schaufelplattformen durch einen Dämpferstift ganz oder teilweise geschlossen, sodass nur eine Kühlluft-Leckageströmung austreten kann. Der Austritt der Kühlluft aus diesem Spalt ermöglicht nicht, die Kühlluft gezielt auf die Oberfläche der Schaufelplattform zu leiten.

Die WO 2007/063 128 A1 zeigt in ähnlicher Konstruktion lediglich einen Spalt zwischen benachbarten Rotorschaufelplattformen, welcher sich bei thermischer Ausdehnung der Schaufelplattformen zunehmend schließt und dann ein Ausströmen von Kühlluft nur noch bedingt zulässt oder gänzlich verhindert. Somit ist ein Ausströmen von Kühlluft weiterhin vom Zwischenplattformspalt abhängig.

Eine weitere Konstruktion zeigt die US 2009/0 263 235 A1. Auch hierbei ist zwischen den benachbarten Schaufelplattformen ein Spalt vorgesehen, welcher sich bei thermischer Ausdehnung der Schaufelplattformen ebenfalls schließt. Der Spalt ist in einem Winkel zur Oberfläche der Schaufelplattformen angeordnet.

Die US 2010/124508 A1 offenbart eine Schaufelplattform-Ausgestaltung, bei welcher zwischen den Schaufelplattformen ein Spalt vorgesehen ist, durch welchen Kühlluft ausströmen kann. Dieser Filmkühlschlitz ist strömungsoptimiert ausgebildet.

Der Erfindung liegt die Aufgabe zugrunde, einen Rotor der eingangs genannten Art zu schaffen, welcher bei einfachem Aufbau und einfacher, kostengünstiger Herstellbarkeit eine effizientere Reduzierung der Oberflächenmetalltemperatur der inneren oder äußeren Schaufelplattform ermöglicht.

Erfindungsgemäß wird die Aufgabe durch die Merkmalskombination des Anspruchs 1 gelöst, die Unteransprüche zeigen weitere vorteilhafte Ausgestaltungen der Erfindung.

Erfindungsgemäß ist vorgesehen, dass, ausgehend von einer der benachbarten inneren und/oder äußeren Schaufelplattform zugewandten Seite der Schaufelplattform, zumindest eine zur Plattformoberseite offene, mit der Kühlluftkammer in Verbindung stehende Ausströmtasche ausgebildet ist. Die äußere Schaufelplattform wird auch als Deckbandsegment oder "shroud" bezeichnet. Gewöhnlich werden die äußeren Turbinenplattformen so ausgelegt, dass der Plattformzwischenspalt sich während des Betriebs (im heißen Zustand) schließt, sodass ohne die Ausströmtasche eine Kühlung der Heißgasseite der äußeren Turbinenplattform nicht möglich ist.

Erfindungsgemäß ist somit vorgesehen, an der Oberfläche der jeweiligen Schaufelplattform eine Ausströmtasche vorzusehen. Diese ist somit radial außen an der Oberfläche oder Oberseite der Schaufelplattform angeordnet und erstreckt sich sowohl in axialer Richtung als auch in Umfangsrichtung. Die Tiefe der Ausströmtasche ist in radialer Richtung vorgesehen. Es ergibt sich somit eine für die Ausströmung der Kühlluft vorgesehene Ausströmtasche, welche sich in allen drei Dimensionen erstreckt und zur Strömungsoptimierung ausgeformt ist. Im Gegensatz zum Stand der Technik, bei welchem nur einfache Schlitze oder Nuten zwischen den Schaufelplattformen vorgesehen sind, ermöglicht die erfindungsgemäße Ausströmtasche somit auch bei einem Schließen des Plattformzwischenspalts durch thermische Ausdehnungen eine direkte und gezielte Filmkühlung der Plattformoberseite. Während beim Stand der Technik die Schlitze oder Nuten zwischen den Schaufelplattformen eine mehrfache

Umlenkung der Strömung der Kühlluft erforderlich machen, wird erfindungsgemäß die Möglichkeit geschaffen, in jedem Betriebspunkt eine störungsfreie Ausströmung der Kühlluft ohne Umlenkung zu realisieren.

Erfindungsgemäß ist somit vorgesehen, die Kühlluft durch die Ausströmtaschen zu leiten und auf diese Weise einen Austritt der Kühlluft und insbesondere eine Filmbildung der Kühlluft auf der Plattformoberseite vorzusehen.

Weiterhin ist bei der Erfindung bei inneren Schaufelplattformen in der Wandung der Kühlluftkammer eine radial nach innen zur Kühlluftkammer geöffnete Kühllufttasche ausgebildet, welche sich zum Dämpfungselement und/oder zum Plattformzwischenspalt öffnet. Durch diese zusätzliche Kühllufttasche erfolgt die Einleitung der Kühlluft in den Bereich des Plattformzwischenspalts in optimaler Weise, ohne dass in dem Dämpfungselement Durchströmausnehmungen ausgebildet sein müssen.

Durch die erfindungsgemäße Ausgestaltung ist es möglich, die Oberflächenmetalltemperatur an der Plattform weiter gegenüber der Kühlung gemäß dem Stand der Technik zu reduzieren oder dementsprechend weniger Sekundärluftmassenstrom zur Kühlung auf akzeptable Betriebstemperaturen zu verwenden.

Erfindungsgemäß wird der Gesamtströmungskanal der Kühlluft mit Hilfe der benachbarten Schaufelplattformen und deren Kühllufttaschen und Ausströmtaschen gebildet. Zusätzlich wird die Kühlluftströmung durch Kontaktflächen des Dämpfungselements geleitet. Erfindungsgemäß kann somit auf aufwendig herstellbare interne und/oder geschlossene Kühlluftkanäle verzichtet werden.

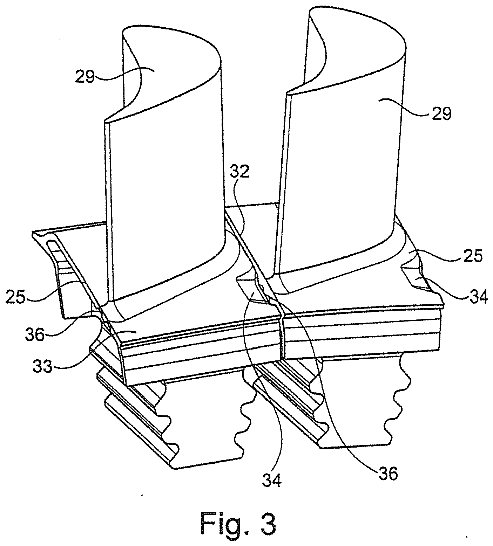

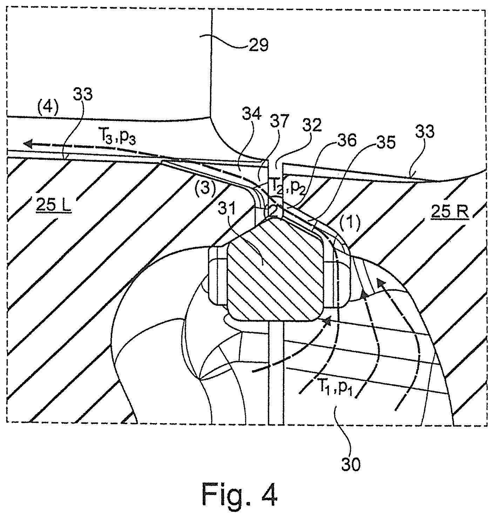

Die Kühllufttasche der inneren Schaufelplattform kann erfindungsgemäß konvergent oder divergent ausgebildet sein. Besonders günstig ist es weiterhin, wenn die Ausströmtasche mit einem möglichst flachen Winkel, idealerweise in einem Winkel zwischen 0° und 35°, zur Plattformoberseite geöffnet oder angeordnet ist. Alternativ kann die Ausströmtasche auch als Freiformfläche strömungsgerecht ausgebildet werden, wobei diese Ausgestaltung bevorzugt in beiden Ebenen vorgesehen ist. Diese Maßnahmen verbessern die Anlage eines Kühlluftfilms auf der Oberfläche der Schaufelplattform. Zur Verbesserung der Strömung trägt auch bei, wenn die Ausströmtasche und/oder die Kühllufttasche jeweils mit freiausgeformten Flächen und/oder Wandungen versehen sind. Insbesondere eine divergente Form der Kühllufttasche (vgl. eines Diffusors) ermöglicht zum Einen eine Geschwindigkeitsabsenkung sowie zum Anderen eine Drückerhöhung des Kühlluftmassenstroms, welches zu einer verbesserten Ausprägung des Films führt. Im Radialschnitt sowie in der Draufsicht (vgl. Figur 3 und 4) betrachtet ist die Ausströmtasche derartig profiliert, dass sie sowohl der Krümmung der Schaufelpattformoberseite sowie der Hauptströmung (Heißgas) tangential angenähert ist.

Bei der erfindungsgemäßen Ausgestaltung ergeben sich nur geringe Druckverluste der Kühlluftströmung, da diese nicht oder nur sehr geringfügig umgeleitet werden muss. Im Gegensatz hierzu zeigen die Konstruktionen des Standes der Technik die Notwendigkeit, die Kühlluftströmung mehrfach umzuleiten, insbesondere um die austretende Kühlluftströmung auf die Oberfläche der Schaufelplattform aufzulegen und/oder ein Dichtelement zu umströmen. Dies resultiert auch in einer höheren Gefahr einer Blockage durch Verschmutzung. Dieses Risiko wird erfindungsgemäß weitestgehend minimiert.

Weiterhin kann vorgesehen sein, dass die beschriebene Ausführung der Ausströmtasche und/oder der Kühllufttasche in ähnlicher Form an der äußeren Heißgasplattformoberfläche (Schaufelspitze) ausgebildet ist. Die Ausströmtasche kann auch eine weitere Durchströmausnehmung in integraler Ausführung in vorwiegend radialer Orientierung aufweisen.

Erfindungsgemäß kann außerdem anstelle eines Dämpfungselementes ein Dichtelement oder ein Dichtdraht (seal-wire) verwendet werden, welches insbesondere bei kleineren Schaufeln vorteilhaft ist, da bei diesen eine Vibrationsdämpfung oft nicht notwendig ist, sodass kein Dämpfungselement zum Einsatz kommt. Die beschriebene optimierte Strömungsführung in der Kühlluftasche sowie in der Ausströmtasche bleiben hiervon unberührt, sodass die Erfindung bei beiden, einem Dämpfungselement und einem Dichtelement, dieselben Effekte und Vorteile entfaltet.

Nachfolgend wird die Erfindung anhand eines Ausführungsbeispiels in Verbindung mit der Zeichnung beschrieben. Dabei zeigt:
- Fig. 1: eine schematische Darstellung eines Gasturbinentriebwerks gemäß der vorliegenden Erfindung,
- Fig. 2: eine vereinfachte Schnittansicht eines Rotors gemäß dem Stand der Technik in einer Radialschnittebene,
- Fig. 3: eine vereinfachte perspektivische Darstellung zweier benachbarter erfindungsgemäß ausgebildeter Schaufelplattformen,
- Fig. 4: eine Schnittansicht, analog Fig. 2, der in Fig. 3 gezeigten Ausgestaltung,
- Fig. 5: eine weitere Schnittansicht, analog Fig. 2, bei geschlossenem Plattformzwischenspalt,
- Fig. 6: eine Draufsicht der Anordnung gemäß Fig. 3 in radialer Richtung,
- Fig. 7: eine Unteransicht, analog Fig. 6,
- Fig. 8: eine perspektivische Detailansicht analog Fig. 3,
- Fig. 9: eine vereinfachte Darstellung eines erfindungsgemäßen Ausführungsbeispiels an einer äußeren Plattform einer Turbinenschaufel, und
- Fig. 10 bis Fig. 12: perspektivische Ansichten von Schaufeln mit äußerer Schaufelplattform analog Fig. 9 oder Fig. 3.

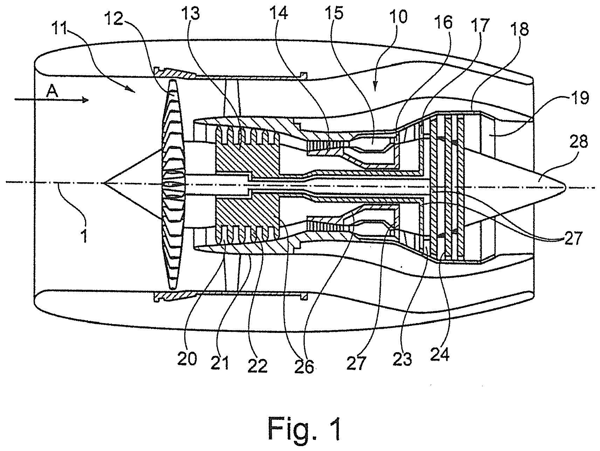

Das Gasturbinentriebwerk 10 gemäß Fig. 1 ist ein allgemein dargestelltes Beispiel einer Turbomaschine, bei der die Erfindung Anwendung finden kann. Das Triebwerk 10 ist in herkömmlicher Weise ausgebildet und umfasst in Strömungsrichtung hintereinander einen Lufteinlass 11, einen in einem Gehäuse umlaufenden Fan 12, einen Mitteldruckkompressor 13, einen Hochdruckkompressor 14, eine Brennkammer 15, eine Hochdruckturbine 16, eine Mitteldruckturbine 17 und eine Niederdruckturbine 18 sowie eine Abgasdüse 19, die sämtlich um eine zentrale Triebwerksachse 1 angeordnet sind.

Der Mitteldruckkompressor 13 und der Hochdruckkompressor 14 umfassen jeweils mehrere Stufen, von denen jede eine in Umfangsrichtung verlaufende Anordnung fester stationärer Leitschaufeln 20 aufweist, die allgemein als Statorschaufeln bezeichnet werden und die radial nach innen vom Kerntriebwerksgehäuse 21 in einen ringförmigen Strömungskanal durch die Kompressoren 13, 14 vorstehen. Die Kompressoren weisen weiter eine Anordnung von Kompressorlaufschaufeln 22 auf, die radial nach außen von einer drehbaren Trommel oder Scheibe 26 vorstehen, die mit Naben 27 der Hochdruckturbine 16 bzw. der Mitteldruckturbine 17 gekoppelt sind.

Die Turbinenabschnitte 16, 17, 18 weisen ähnliche Stufen auf, umfassend eine Anordnung von festen Leitschaufeln 23, die in der Regel radial nach innen vom Gehäuse 21 in den ringförmigen Strömungskanal durch die Turbinen 16, 17, 18 vorstehen, und eine nachfolgende Anordnung von Turbinenrotorschaufeln 24, die nach außen von einer drehbaren Nabe 27 vorstehen. Die Kompressortrommel oder Kompressorscheibe 26 und die darauf angeordneten Schaufeln 22 sowie die Turbinenrotornabe 27 und die darauf angeordneten Turbinenrotorschaufeln 24 drehen sich im Betrieb um die Triebwerksachse 1.

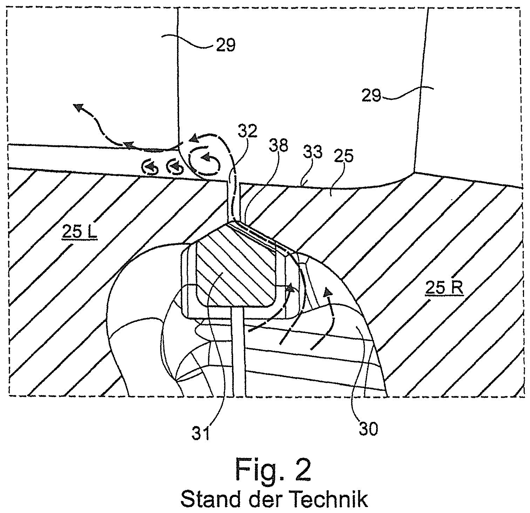

Die Fig. 2 zeigt eine Schnittansicht gemäß dem Stand der Technik, in einer, bezogen auf die Triebwerksachse, radialen Schnittebene. Dabei sind benachbarte Schaufelplattformen 25 gezeigt, welche jeweils mit einer Turbinenschaufel 29 versehen sind. Zwischen den Schaufelplattformen 25 (linke Schaufelplattform 25L, rechte Schaufelplattform 25R) ist eine sich im Wesentlichen in Umfangsrichtung erstreckende Kühlluftkammer 30 oder ein Kühlluftplenum ausgebildet. Weiterhin ist zwischen benachbarten Schaufelplattformen 25 ein sich in Axialrichtung bzw. Radialrichtung erstreckendes Dämpfungselement 31 angeordnet, welches mit Durchströmausnehmungen 38 versehen ist. Wie in Fig. 2 gezeigt, strömt Kühlluft durch die Durchströmungsausnehmungen (Kühlungskanäle) des Dämpfungselements 31 und durch einen zwischen den Schaufelplattformen 25 gebildeten Plattformzwischenspalt 32. Die Kühlluft tritt dabei im Wesentlichen in radialer Richtung aus und wird stark verwirbelt, so dass keine optimale Kühlung der Plattformoberseite 33 möglich ist.

Wie sich insbesondere aus der Darstellung der Fig. 3 ergibt, ist die Ausströmtasche 34 dreidimensional als Freiformfläche in die Oberfläche der Schaufelplattform eingearbeitet, damit die Kühlluft wirksam als Kühlluftfilm auf die Oberfläche der Schaufelplattform aufgelegt werden kann. Die Zuführung der Kühlluft erfolgt dabei, wie nachfolgend beschrieben, nicht wie beim Stand der Technik durch den Plattformzwischenspalt, sondern vielmehr durch die Ausströmtasche. Deshalb besteht erfindungsgemäß auch nicht die Gefahr, dass bei einem Schließen des Plattformzwischenspaltes durch thermische Ausdehnung der Schaufelplattformen die Kühlluftversorgung reduziert oder gänzlich unterbrochen wird.

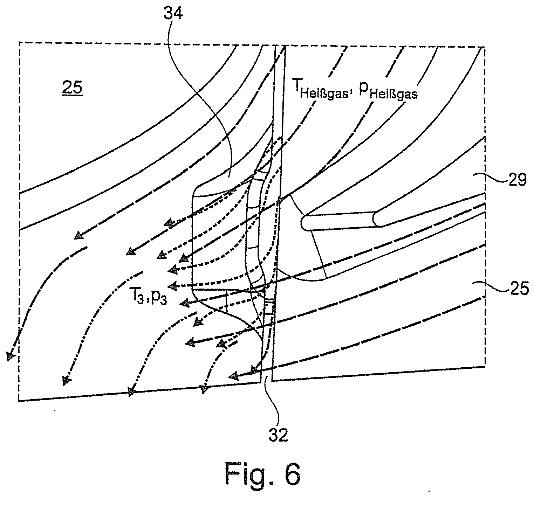

Die Fig. 3 zeigt ein Ausführungsbeispiel der Erfindung in perspektivischer Darstellung. Dabei ist an dem Randbereich der in Fig. 3 links gezeigten Schaufelplattform 25 eine Ausströmtasche 34 ausgebildet, durch welche Kühlluft, welche aus Ausströmöffnungen 36 austritt, geführt und zur Plattformoberseite 33 geleitet wird. Die austretende Kühlluft folgt dem Schaufelprofil bzw. der Hauptströmung (vgl. Fig. 6) und strömt gemäß Fig. 3 im Wesentlichen nach links bzw. von der konkaven Schaufelseite zur konvexen Schaufelseite.

Die Fig. 4 zeigt eine Schnittansicht analog Fig. 2. Dabei ist dargestellt, dass Kühlluft durch die Kühlluftkammer 30 einströmt. Die Kühlluft wird durch eine Kühllufttasche 35 geführt, welche im Bereich der Kühlluftkammer 30 an der Unterseite der Schaufelplattform 25 (linke Schaufelplattform 25L, rechte Schaufelplattform 25R) ausgebildet ist. Es ist ersichtlich, dass die Kühllufttasche 35 an einem radial weiter außen liegenden Bereich mit einem größeren Radius platziert werden kann, als die aus dem Stand der Technik bekannten Durchströmausnehmungen 38 des Dämpfungselements 31 (s. Fig. 2). Somit erfolgt eine bessere Anströmung der konkaven, inneren Plattformseite. Zur Ausbildung der Kühllufttasche 35 muss die Wandstärke der Schaufelplattform nur lokal verringert werden. Nach dem Stand der Technik ist es nicht möglich, die gesamte Dämpferanlagefläche gegenüber der Plattformoberseite näher anzuordnen, um verbesserte Kühlluftströmungseigenschaften zu erzeugen, ohne anderweitige Nachteile (z. B. Integritätsprobleme) in Kauf nehmen zu müssen. Die Form der Kühllufttaschen 35 (Kühlungskanäle) kann unterschiedlich ausgebildet werden, beispielsweise mit einem rechteckigen Querschnitt, einem ovalen Querschnitt, eckig oder abgerundet. Weiterhin ist es möglich, den Winkel zwischen der Kühllufttasche 35 und der Plattformoberseite 33 zu variieren, um optimale Strömungs-und Massenstromverhältnisse für den jeweiligen Anwendungsfall zu erzeugen.

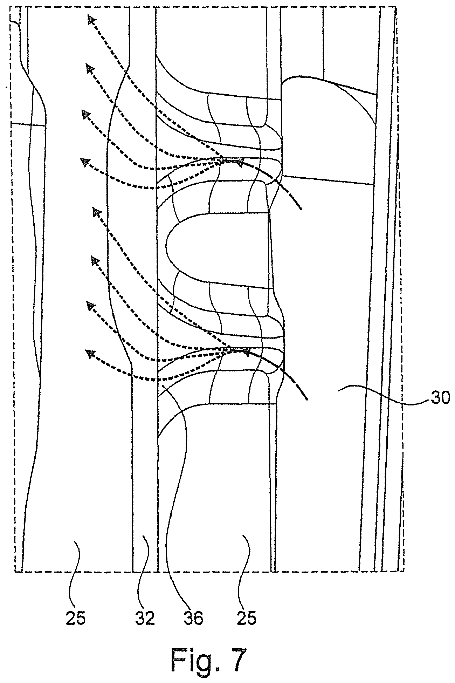

Erfindungsgemäß ist es somit möglich, die Form der Kühllufttaschen 35 variabler zu gestalten, als dies bei den Durchströmausnehmungen (Kühlungskanälen) im Dämpfungselement 31 möglich wäre. So ist es erfindungsgemäß vorgesehen, die Kühllufttaschen 35 zur Verbesserung der Strömungspfade und zur Beeinflussung von Temperatur und Druck konvergent oder divergent auszugestalten oder abgerundete Formen zu verwenden. Eine divergente Form, welche, wie dargestellt, abgerundet ausgebildet ist, erweist sich als besonders vorteilhaft, um die Geschwindigkeit und den dynamischen Druck der Kühlluftströmung zu verringern und dadurch den statischen Druck zu erhöhen und die Temperatur zu verringern. Weiterhin ergibt sich eine gleichmäßigere Verteilung der Kühlluft über die axiale Länge der Plattform, siehe hierzu auch Fig. 7, welche in einer in Radialrichtung blickenden Unteransicht die Ausgestaltung der Fig. 4 zeigt.

Erfindungsgemäß kann abhängig von den Kühlungsanforderungen die Anzahl und die Lage der Kühllufttaschen über die gesamte axiale Länge der Schaufelplattform variiert werden.

Die Fig. 4 zeigt weiterhin, dass in der benachbarten Schaufelplattform (linke Schaufelplattform gemäß Fig. 4, konvexe Seite) eine Ausströmtasche 34 ausgebildet ist, in deren Einströmöffnung 37 die aus der Ausströmöffnung 36 der Kühllufttasche 35 ausströmende Kühlluft eintritt. Diese wird in einem flachen Winkel zur Oberfläche bzw. Plattformoberseite 33 geleitet, so dass sich sowohl günstige Strömungsverhältnisse als auch optimierte Temperatur- und Druckverhältnisse ergeben. Die Ausströmtasche 34 sorgt für einen direkten und ungehinderten Kühlluftfluss zwischen dem Eintritt der Schaufelfußkavität (Kühlluftkammer 30 oder Kühlluftplenum) und dem Austritt aus der konvexen Plattformoberseite 33. Wie in Fig. 4 gezeigt, kann sich der Kühlluftfilm besser auf der Plattformoberseite 33 ausbreiten und wird weniger stark abgelöst. Insbesondere diese Merkmale sorgen für eine Steigerung der Kühlungseffektivität. Die Form der Ausströmtasche 34 kann den Anforderungen gemäß angepasst werden, sie ist bevorzugt jedoch möglichst flach ansteigend und stark ausgerundet ausgestaltet, um ein Ablösen des Kühlluftfilms sowie Ablösungskanten zu vermeiden.

Ein weiterer Vorteil der Ausströmtasche 34 besteht darin, dass toleranzbedingte radiale Stufen zwischen benachbarten Schaufelplattformen 25 reduziert werden können, um zu vermeiden, dass die Hauptströmung über eine Kante ablöst und so zusätzliche Strömungsverluste und eine damit verbundene Verringerung des Turbinenwirkungsgrades verursacht.

Die Ausgestaltung der Ausströmtasche 34 kann in Form, Geometrie, Winkel, Anzahl, Länge und Lage variiert werden, um den Kühlungsanforderungen gerecht zu werden. Beispielsweise ist es erfindungsgemäß möglich, die Ausströmtasche 34 über die gesamte axiale Länge der Schaufelplattform 25 auszuführen. Somit werden zum einen die Verluste aufgrund der toleranzbedingten Stufen zwischen benachbarten Schaufelplattformen 25 reduziert und zum anderen auch der vordere Teil der Schaufelplattform 25 effektiv gekühlt.

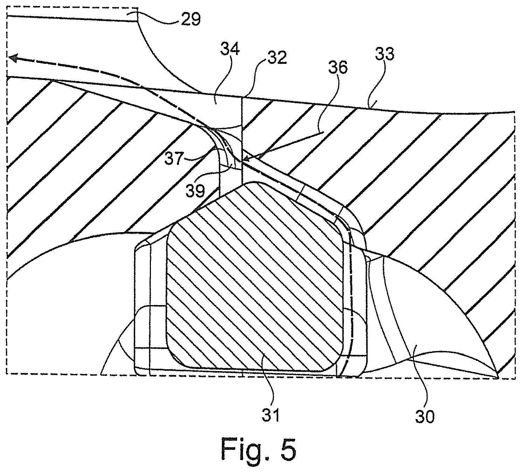

Die Fig. 5 zeigt eine Ansicht ähnlich Fig. 4, wobei der Plattformzwischenspalt 32 geschlossen ist. Bei einer derartigen Konfiguration ist es möglich, eine zweite Ausströmtasche 39 auf der Plattformoberseite 33 vorzusehen, welche dafür sorgt, dass auch bei geschlossenem Plattformzwischenspalt 32 zwischen benachbarten Schaufelplattformen ein ausreichender Kühlluftmassenstrom strömen kann. Dieser Effekt tritt insbesondere in transienten Punkten starker Beschleunigung der Fluggasturbine auf, beispielsweise beim Übergang vom Leerlauf zur Maximalleistung während des Starts. In diesen Betriebszuständen erreicht die Plattformmetalltemperatur ihre höchsten Werte, während die Turbinenscheibe noch nicht vollständig erwärmt und radial gewachsen ist. Gegenüber der Ausgestaltung gemäß dem Stand der Technik ist erfindungsgemäß kein minimaler Plattformzwischenspalt 32 zur Sicherstellung des Kühlluftmassenstroms erforderlich, welcher zu nicht gewollten Leckagen in den übrigen Betriebspunkten der Fluggasturbine sowie an anderen geometrischen Punkten entlang der Schaufelplattform 25 führen würde.

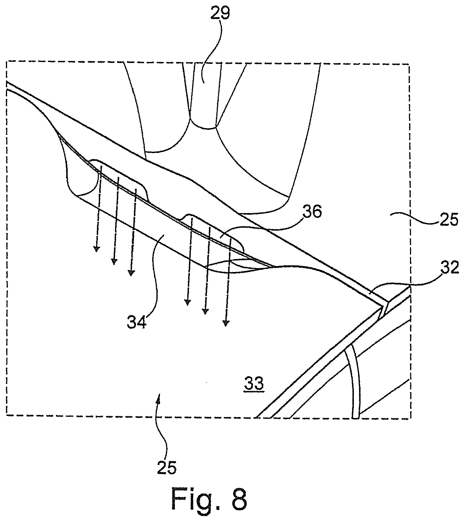

Die Fig. 6 und 8 zeigen jeweils Detailansichten, von der konvexen Seite der Schaufelplattform 25 aus gesehen. Die Fig. 6 zeigt insbesondere die Heißgasströmung und die austretende Kühlluftströmung. In Fig. 8 ist verdeutlicht, wie die Kühlluftströmung aus der Ausströmöffnung 36 austritt und in die Ausströmtasche 35 geleitet wird.

Die erfindungsgemäße Lösung beruht darauf, dass Luft aus der Kühlluftkammer 30 oder dem Kühlluftplenum mit höherem Druck zugeführt wird und zu der Plattformoberseite 33 der Schaufelplattform 25 mit niedrigerem Druck strömt. Im Einzelnen erfolgt dies, wie in Fig. 4 und 6 gezeigt.

Die Kühlluft wird aus dem Sekundärluftsystem der Gasturbine mit der Temperatur T₁ und dem Totaldruck p₁ zugeführt, sie befindet sich in der Kühlluftkammer 30 oder dem Kühlluftplenum und wird über die Kühllufttasche 35 (Position (1)) dem Plattformzwischenspalt 32 (Position (2)) zugeführt. Aufgrund der divergenten Form der Kühllufttasche 35 an der Position (1) senkt sich die Temperatur der Kühlluft zunächst ab, erwärmt sich jedoch aufgrund der Prallkühlungseffekte an der konkaven Plattformunterseite, so dass sich eine Temperatur T₂ einstellt. Der dynamische Druck an der Position (2) (Plattformzwischenspalt 32) verringert sich aufgrund der divergenten Form der Kühllufttasche 35, so dass der statische Druck ansteigt und sich ein Totaldruck p₂ einstellt. Dabei gilt p₁ > p₂. Mittels der Ausströmtasche 34 (Position (3)) wird die Luft der konvexen Plattformoberseite der benachbarten Turbinenschaufel zugeführt, vermischt sich teilweise mit dem Heißgas der Heißgasströmung und bildet einen Kühlfilm zwischen der Plattformoberseite 33 und dem Heißgas mit einer Temperatur T₃ und einem Totaldruck p₄ (Position (4)). Dabei gilt p₂ > p₃ und T₂ < T₃. Durch die erfindungsgemäße Ausgestaltung ist es möglich, die Oberflächenmetalltemperatur an der Position (4) (Plattform) weiter zu reduzieren oder entsprechend weniger Sekundärluftmassenstrom zur Kühlung zu verwenden.

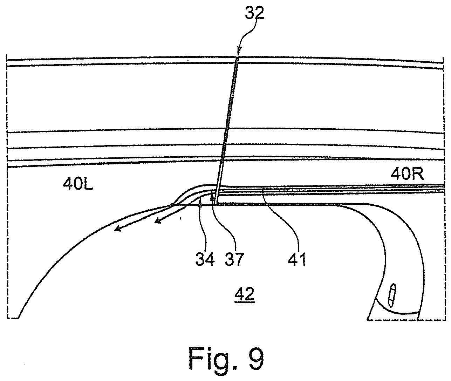

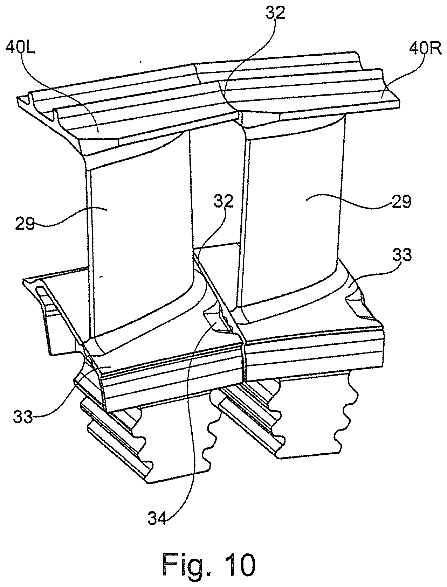

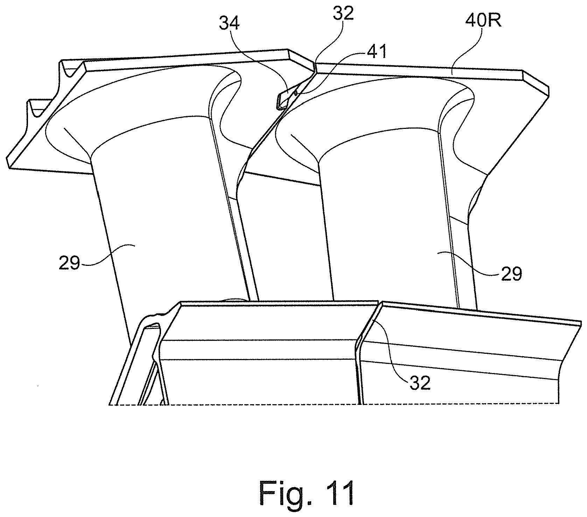

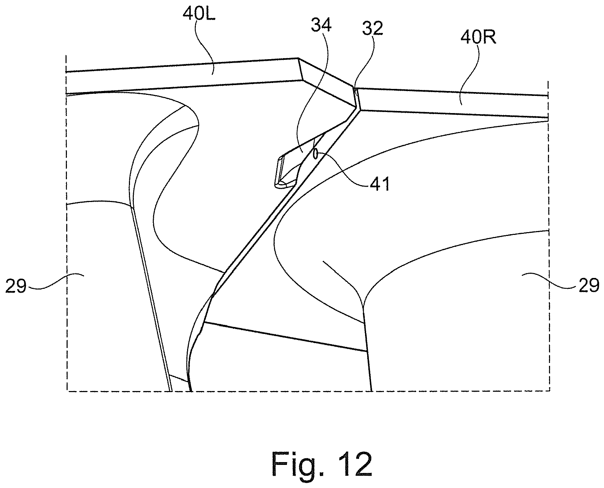

Die Fig. 9 bis 12 zeigen in vereinfachter Ansicht ein Ausführungsbeispiel, bei welchem eine äußere Plattform 40 (auch als Deckbandsegment oder "shroud" bezeichnet) der Turbinenlaufschaufel 29 mit einer Kühlluftbohrung 41 versehen ist, durch welche Kühlluft durch eine Einströmöffnung 37 in eine Ausströmtasche 34 strömt. Im Vergleich zur Fig. 5 verdeutlicht die Fig. 9, dass die Erfindung sowohl an einer inneren als auch an einer äußeren Schaufelplattform realisiert werden kann. Die Fig. 9 bis 10 zeigen die erfindungsgemäße Lösung in perspektivischer Ansicht im Detail. Daher ist insbesondere die Anordnung und Form der Ausströmtasche 34 verdeutlicht.

Erfindungsgemäß ergeben sich somit die folgenden Vorteile:
Erfindungsgemäß erfolgt eine direkte Verbindung zwischen dem Eintritt und dem Austritt der Kühlluft, dies führt zu einer reduzierten Ablösungsgefahr und zu geringeren Strömungsverlusten.

Durch die bessere Ausprägung des Kühlluftfilms aufgrund der Kombination der Kühllufttasche 35 und der Ausströmtasche 34 (konvexer und konkaver Kühlungsspalt) ergibt sich ein deutlich höherer Kühleffekt, da sich die Kühlluftströmung besser und ohne Ablösen bzw. Verluste an die Plattformoberseite 33 anlegen kann.

Die erfindungsgemäße Ausgestaltung ist mit existierenden Fertigungsverfahren einfach herstellbar, sie kann beispielsweise beim Guss der Schaufelplattformen kostengünstig realisiert werden.

Erfindungsgemäß ist, wie beispielsweise in Verbindung mit Fig. 5 gezeigt, eine Verringerung des Plattformzwischenspalts 32 durch einen zweiten konkaven Kühlungsspalt (zweite Ausströmtasche 39) möglich. Dies führt durch Reduzierung aerodynamischer Verluste zu einer Effizienzsteigerung der Hochdruckturbine.

Die erfindungsgemäß vorgesehene Kühlung ist in ihrer Abhängigkeit vom Verschleißverhalten des Dämpfungselements 31, insbesondere der Abnutzung der Dämpferanlagefläche, deutlich reduziert, wodurch sich der Querschnitt des Plattformzwischenspalts 32 und somit der Kühlluftmassenstrom beim Stand der Technik ändert.

Die erfindungsgemäße Lösung ist weiterhin weniger anfällig für Verschmutzungen und Blockaden durch Fremdkörper. Das Verhältnis zwischen Breite und Höhe der Kühllufttasche kann ohne negative Beeinflussung der radialen Position geändert werden, um eine Reduzierung der Anfälligkeit für Blockaden zu erreichen.

Es ergibt sich eine höhere Flexibilität bezüglich der Geometrie der Kühlungskanäle, insbesondere der Kühllufttasche 35 und der Ausströmtasche 34. Dies ist insbesondere bei einer integralen Ausführung vorteilhaft. Es ergibt sich insgesamt eine gezielte Optimierung der Plattformkühlung.

Erfindungsgemäß sind die Anzahl und die Größe der Ausströmtaschen und der Kühllufttaschen unabhängig von der Kontaktfläche des Dämpfungselements und/oder Dichtelements.

Durch die Erfindung ist eine Verringerung der Strömungsverluste bei toleranzbedingten radialen Stufen zwischen benachbarten Schaufelplattformen sichergestellt.

Durch die Erfindung wird zudem durch den gerichteten Kühlluftmassenstrom aus der Ausströmtasche (in Richtung der Hauptströmrichtung des Heißgases) ein zusätzliches Drehmoment und somit zusätzliche Arbeit erzeugt, um den Turbinenwirkungsgrad zu verbessern.

Die Erfindung ist sowohl bei Fluggasturbinen als auch bei stationären Industriegasturbinen oder ganz allgemein bei Gasturbinen oder Turbomaschinen anwendbar.

Erfindungsgemäß kann eine Kühlung der Plattformoberfläche sowohl mittels Dämpfungselementen (31) als auch einfachen Dichtelementen oder Dichtdrähten (seal-wires) realisiert werden.

### Bezugszeichenliste:

- 1: Triebwerksachse
- 10: Gasturbinentriebwerk / Kerntriebwerk
- 11: Lufteinlass
- 12: Fan
- 13: Mitteldruckkompressor (Verdichter)
- 14: Hochdruckkompressor
- 15: Brennkammer
- 16: Hochdruckturbine
- 17: Mitteldruckturbine
- 18: Niederdruckturbine
- 19: Abgasdüse
- 20: Leitschaufeln
- 21: Kerntriebwerksgehäuse
- 22: Kompressorlaufschaufeln
- 23: Leitschaufeln
- 24: Turbinenrotorschaufeln
- 25: Schaufelplattform
- 26: Kompressortrommel oder -scheibe
- 27: Turbinenrotornabe
- 28: Auslasskonus
- 29: Turbinenschaufel
- 30: Kühlluftkammer
- 31: Dämpfungselement
- 32: Plattformzwischenspalt
- 33: Plattformoberseite
- 34: Ausströmtasche
- 35: Kühllufttasche
- 36: Ausströmöffnung
- 37: Einströmöffnung
- 38: Durchströmausnehmung
- 39: zweite Ausströmtasche
- 40: äußere Schaufelplattform der Turbinenlaufschaufel
- 41: Kühlluftbohrung in der äußeren Plattform
- 42: Heißgasseite

## Patentansprüche

1. Rotor einer Turbine einer Gasturbine, mit einer Turbinenrotornabe (27), an welcher am Umfang eine Vielzahl von Schaufelplattformen (25) angeordnet sind, welche jeweils zumindest eine Turbinenschaufel (29) tragen, sowie mit jeweils einer durch benachbarte Schaufelplattformen (25) und ein Dämpfungselement (31) und/oder Dichtelement gebildeten Kühlluftkammer (30) zur Durchführung von Kühlluft, wobei zwischen benachbarten Schaufelplattformen (25) jeweils zumindest das Dämpfungselement (31) und/oder Dichtelement radial innerhalb eines zwischen benachbarten Schaufelplattformen (25) ausgebildeten Plattformzwischenspalts (32) angeordnet ist, **dadurch gekennzeichnet, dass** an einer radial äußeren Plattformoberseite (33) der jeweiligen Schaufelplattform (25) zumindest eine Ausströmtasche (34) ausgebildet ist, welche in einem flachen Winkel oder tangential zur Plattformoberseite (33) angeordnet ist, wobei die sich ergebende Kühlluftkammer (30) und/oder der Plattformzwischenspalt (32) so ausgebildet sind, dass, ausgehend von einer der benachbarten Schaufelplattform (25) zugewandten Seite der Schaufelplattform (25) die zur Plattformoberseite (33) offene, mit der Kühlluftkammer (30) in Verbindung stehende Ausströmtasche (34) ausgebildet ist und dass in der Wandung der Kühlluftkammer (30) zumindest eine radial nach innen zur Kühlluftkammer (30) geöffnete Kühllufttasche (35) ausgebildet ist, welche sich zum Dämpfungselement (31) und/oder Dichtelement oder zu dem Plattformzwischenspalt (32) öffnet.

2. Rotor nach Anspruch 1, **dadurch gekennzeichnet, dass** ausschließlich in der Wandung der Kühlluftkammer (30) mindestens eine radial nach innen zur Kühlluftkammer (30) geöffnete Kühllufttasche (35) ausgebildet ist, welche sich zum Dämpfungselement (31) und/oder Dichtelement und/oder zu dem Plattformzwischenspalt (32) öffnet, jedoch nicht in Kombination mit einer gesonderten Ausströmtasche (34) ausgeführt ist.

3. Rotor nach Anspruch 1 oder 2, **dadurch gekennzeichnet, dass** die Kühllufttasche (35) konvergent oder divergent ausgebildet ist.

4. Rotor nach einem oder mehreren der Ansprüche 1 bis 3, **dadurch gekennzeichnet, dass** die Kühllufttasche (35) mit einem Winkel zur Radialrichtung parallel oder divergent zum Dämpfungselement (31) und/oder Dichtelement ausgebildet ist.

5. Rotor nach einem oder mehreren der Ansprüche 1 bis 4, **dadurch gekennzeichnet, dass** die Ausströmtasche (34) mit abgerundeten Kanten oder frei ineinander übergehenden Flächen ausgebildet ist.

6. Rotor nach einem oder mehreren der Ansprüche 1 bis 5, **dadurch gekennzeichnet, dass** die Wandungen der Kühllufttasche (35) abgerundet oder frei ineinander übergehend ausgebildet sind.

7. Rotor nach einem oder mehreren der Ansprüche 1 bis 6, **dadurch gekennzeichnet, dass** eine Ausströmöffnung (36) der Kühllufttasche (35) einer Schaufelplattform (25) exakt gegenüberliegend zu einer Einströmöffnung (37) der Ausströmtasche (34) der benachbarten Schaufelplattform (25) angeordnet ist.

8. Rotor nach einem oder mehreren der Ansprüche 1 bis 7, **dadurch gekennzeichnet, dass** die Ausströmtasche (34) eine weitere Ausströmtasche (39) in integraler Ausführung in vorwiegend radialer Orientierung aufweist.

9. Rotor nach einem oder mehreren der Ansprüche 1 bis 8, **dadurch gekennzeichnet, dass** über die axiale Länge der Schaufelplattform (25) mehrere Ausströmtaschen (34) oder eine die gesamte Länge einnehmende Ausströmtasche (34) angeordnet sind.

10. Rotor nach einem oder mehreren der Ansprüche 1 bis 9, **dadurch gekennzeichnet, dass** über die axiale Länge der Schaufelplattform (25) mehrere Kühllufttaschen (35) angeordnet sind.

11. Rotor nach einem oder mehreren der Ansprüche 1 bis 10, **dadurch gekennzeichnet, dass** das Dämpfungselement (31) und/oder Dichtelement mit Durchströmausnehmungen (38) versehen ist.

12. Rotor nach einem oder mehreren der Ansprüche 1 bis 11, **dadurch kennzeichnet, dass** die Ausströmtasche (34) und/oder die Kühllufttasche (35) an einer radial äußeren Heißgasplattformoberfläche ausgebildet ist.

13. Rotor nach einem der vorhergehenden Ansprüche, ferner umfassend eine Einströmöffnung (37), durch welche Kühlluft in die Ausströmtasche (34) strömt, wobei die Einströmöffnung (37) am Plattformzwischenspalt (32) ausgehend von einer Kante der Plattform in Richtung zur Ausströmtasche (34) zurückgesetzt ist.

## Claims

1. Turbine rotor of a gas turbine having a turbine rotor hub (27), on which over the circumference a plurality of blade platforms (25) is arranged, each of which carrying at least one turbine blade (29), and having one each cooling air chamber (30) for passing through cooling air formed by adjacent blade platforms (25) and a damping element (31) and/ or a sealing element, wherein between adjacent blade platforms (25) at least the damping element (31) and/ or the sealing element is arranged in each case radially within a platform intermediate gap (32) provided between adjacent blade platforms (25), **characterized in that** at a radially outer platform upper side (33) of the respective blade platform (25) at least one outflow pocket (34) is designed, which is arranged at a shallow angle or tangentially to the platform upper side (33), wherein the resultant cooling air chamber (30) and/ or the platform intermediate gap (32) are designed such that starting from a side of the blade platform (25) facing the adjacent blade platform (25), the outflow pocket (34) open to the platform upper side (33) and connected to the cooling air chamber (30) is formed, and that at least one cooling air pocket (35) opened radially inwards to the cooling air chamber (30) is provided in the wall of the cooling air chamber (30) and opens towards the damping element (31) and/ or the sealing element or the platform intermediate gap (32).

2. Rotor in accordance with Claim 1, **characterized in that** at least one cooling air pocket (35) opened radially inwards to the cooling air chamber (30) is provided exclusively in the wall of the cooling air chamber (30) and opens towards the damping element (31) and/ or the sealing element and/ or the platform intermediate gap (32), said cooling air pocket (35) however not being designed in combination with a separate outflow pocket (34).

3. Rotor in accordance with Claim 1 or 2, **characterized in that** the cooling air pocket (35) is designed convergent or divergent.

4. Rotor in accordance with one or several of the Claims 1 to 3, **characterized in that** the cooling air pocket (35) is designed at an angle relative to the radial direction, parallel or divergent to the damping element (31) and/ or sealing element.

5. Rotor in accordance with one or several of the Claims 1 to 4, **characterized in that** the outflow pocket (34) is designed with rounded edges or surfaces freely merging into one another.

6. Rotor in accordance with one or several of the Claims 1 to 5, **characterized in that** the walls of the cooling air pocket (35) are designed rounded or freely merging into one another.

7. Rotor in accordance with one or several of the Claims 1 to 6, **characterized in that** one outflow opening (36) of the cooling air pocket (35) of a blade platform (25) is arranged exactly opposite to one inflow opening (37) of the outflow pocket (34) of the adjacent blade platform (25).

8. Rotor in accordance with one or several of the Claims 1 to 7, **characterized in that** the outflow pocket (34) has a further outflow pocket (39) in an integral design with predominantly radial orientation.

9. Rotor in accordance with one or several of the Claims 1 to 8, **characterized in that** over the axial length of the blade platform (25) several outflow pockets (34) are arranged, or one outflow pocket (34) covering the entire length.

10. Rotor in accordance with one or several of the Claims 1 to 9, **characterized in that** over the axial length of the blade platform (25) several cooling air pockets (35) are arranged.

11. Rotor in accordance with one or several of the Claims 1 to 10, **characterized in that** the damping element (31) and/ or sealing element is provided with throughflow recesses (38).

12. Rotor in accordance with one or several of the Claims 1 to 11, **characterized in that** the outflow pocket (34) and/ or the cooling air pocket (35) is provided on a radially outer hot gas platform surface.

13. Rotor in accordance with one of the preceding Claims, further comprising an inflow opening (37) through which cooling air flows into the outflow pocket (34), wherein the inflow opening (37) on the platform intermediate gap (32) is set back in the direction of the outflow pocket (34), starting from an edge of the platform.

## Revendications

1. Rotor de turbine d'une turbine à gaz, avec un moyeu de rotor de turbine (27), sur la circonférence duquel est disposée une pluralité de plateformes d'aube (25) qui portent chacune au moins une aube de turbine (29) et ayant chacune une chambre d'air de refroidissement (30) pour le passage de l'air de refroidissement, formée par des plateformes d'aube (25) adjacentes et un élément d'amortissement (31) et/ ou un élément d'étanchéité, sachant qu'entre des plateformes d'aube (25) adjacentes, respectivement au moins ledit élément d'amortissement (31) et/ou élément d'étanchéité est disposé radialement à l'intérieur d'une fente inter-plateforme (32) formée entre les plateformes d'aube (25) adjacentes, **caractérisé en ce que** sur un côté supérieur de plateforme (33) radialement extérieur de la plateforme d'aube (25) concernée est constituée au moins une poche d'échappement (34) qui est disposée selon un angle plat ou tangentiellement au côté supérieur de la plateforme (33), sachant que la chambre d'air de refroidissement (30) résultante et/ ou la fente inter-plateforme (32) sont/ est conçue(s) de sorte à ce qu'est constituée, partant d'un côté de la plateforme d'aube (25) faisant face à la plateforme d'aube adjacente (25), la poche d'échappement (34) ouverte en direction du côté supérieur de la plateforme (33) et reliée à la chambre d'air de refroidissement (30) et qu'au moins une poche d'air de refroidissement (35) ouverte radialement vers l'intérieur en direction de la chambre d'air de refroidissement (30) est constituée dans la paroi de la chambre d'air de refroidissement (30), qui s'ouvre en direction de l'élément d'amortissement (31) et/ou de l'élément d'étanchéité et/ ou de la fente inter-plateforme (32).

2. Rotor selon la revendication n° 1, **caractérisé en ce qu'**est constituée, exclusivement dans la paroi de la chambre d'air de refroidissement (30), au moins une poche d'air de refroidissement (35) ouverte radialement vers l'intérieur en direction de la chambre d'air de refroidissement (30), qui s'ouvre en direction de l'élément d'amortissement (31) et/ ou de l'élément d'étanchéité et/ ou de la fente inter-plateforme (32) mais qui n'est pas conçue en combinaison avec une poche d'échappement (34) séparée.

3. Rotor selon la revendication n° 1 ou n° 2, **caractérisé en ce que** la poche d'air de refroidissement (35) est conçue de façon convergente ou divergente.

4. Rotor selon une ou plusieurs des revendications n° 1 à n° 3, **caractérisé en ce que** la poche d'air de refroidissement (35) est conçue selon un angle relatif au sens radial de façon parallèle ou divergente par rapport à l'élément d'amortissement (31) et/ ou l'élément d'étanchéité.

5. Rotor selon une ou plusieurs des revendications n° 1 à n° 4, **caractérisé en ce que** la poche d'échappement (34) est conçue avec des bords arrondis ou des surfaces se fondant librement les unes dans les autres.

6. Rotor selon une ou plusieurs des revendications n° 1 à n° 5, **caractérisé en ce que** les parois de la poche d'air de refroidissement (35) sont conçues de façon arrondie ou se fondent librement les unes dans les autres.

7. Rotor selon une ou plusieurs des revendications n° 1 à n° 6, **caractérisé en ce qu'**une ouverture d'échappement (36) de la poche d'air de refroidissement (35) d'une plateforme d'aube (25) est disposée exactement en face d'une ouverture d'admission (37) de la poche d'échappement (34) de la plateforme d'aube (25) adjacente.

8. Rotor selon une ou plusieurs des revendications n° 1 à n° 7, **caractérisé en ce que** la poche d'échappement (34) présente une autre poche d'échappement (39) de conception intégrale avec principalement une orientation radiale.

9. Rotor selon une ou plusieurs des revendications n° 1 à n° 8, **caractérisé en ce que** plusieurs poches d'échappement (34) ou une poche d'échappement (34) prenant toute la longueur sont/ est disposée(s) sur la longueur axiale de la plateforme d'aube (25).

10. Rotor selon une ou plusieurs des revendications n° 1 à n° 9, **caractérisé en ce que** plusieurs poches d'air de refroidissement (35) sont disposées sur la longueur axiale de la plateforme d'aube (25).

11. Rotor selon une ou plusieurs des revendications n° 1 à n° 10, **caractérisé en ce que** l'élément d'amortissement (31) et/ ou l'élément d'étanchéité sont/ est pourvu(s) d'évidements de passage (38).

12. Rotor selon une ou plusieurs des revendications n° 1 à n° 11, **caractérisé en ce que** la poche d'échappement (34) et/ ou la poche d'air de refroidissement (35) sont/ est conçue(s) sur une surface de plateforme de gaz chaud radialement extérieure.

13. Rotor selon une des revendications précédentes, comprenant de plus une ouverture d'admission (37) à travers laquelle de l'air de refroidissement entre dans la poche d'échappement (34), sachant que l'ouverture d'admission (37) sur la fente inter-plateforme (32) est décalée en direction de la poche d'échappement (34), en partant d'un bord de la plateforme.
